# EUROPEAN PATENT SPECIFICATION

(11) **EP 1 075 771 B1**
(45) Date of publication and mention of the grant of the patent: **25.06.2003**
(21) Application number: 98924257.3
(22) Date of filing: 30.04.1998
(51) Int. Cl.: H04Q 7/22, H04L 29/06

(54) **METHOD AND SYSTEM FOR PERFORMING DATA TRANSMISSION**
VERFAHREN UND SYSTEM ZUR DATENÜBERTRAGUNG
PROCEDE ET SYSTEME DE TRANSMISSION DE DONNEES

(43) Date of publication of application: 14.02.2001
(73) Proprietor: Nokia Corporation, 02150 Espoo (FI)
(72) Inventor: LEHTIMÄKI, Matti, FIN-02600 Espoo (FI)
(74) Representative: Leson, Thomas Johannes Alois, Dipl.-Ing.
(86) International application number: EP9802573
(87) International publication number: WO99057923

(56) References cited:
- EP-A- 0 661 893
- EP-A- 0 759 673
- WO-A-95/32594
- WO-A-97/25824

## Description

### FIELD OF THE INVENTION

The present invention relates to a method and a system for performing data transmission, especially in a mobile network like a GSM network.

### BACKGROUND OF THE INVENTION

Usually, a data call generated in a mobile network is transmitted to a fixed network. In case the fixed network is only capable of transmitting speech signals, a data call from the mobile network is transmitted through a modem which changes the data flow into a format which can be transmitted through the fixed network. Thereby, the transmitted data is converted into modem tones which can be passed through the fixed network.

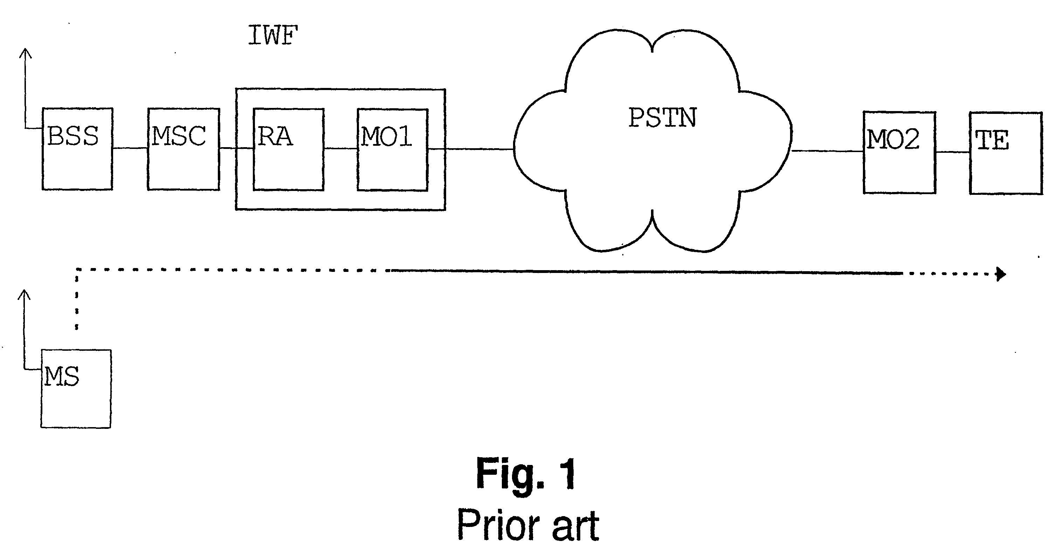

Fig. 1 shows a known configuration of a GSM network connected to a PSTN (Public Switched Telephone Network), wherein a data call indicated by an arrow is transmitted from a mobile station MS to a terminal equipment TE like for example a data processing device or a facsimile apparatus connected to the PSTN. The data call is radio transmitted from the mobile station MS to a base station subsystem BSS of the GSM system. The base station subsystem BSS is connected to a mobile switching center MSC which performs switching according to the desired called party.

Furthermore, an interworking function IWF is provided as a functional entity associated with the MSC. The IWF provides the functionality necessary to allow interworking between the PSTN as the fixed network and the GSM network as the mobile network.

The functions of the IWF depend on the services and the type of fixed network. In the present case, the IWF is required to convert the protocols used in the GSM network to those used in the PSTN. Therefore, the IWF may comprise a rate adapter RA and a modem MO1.

The rate adapter RA is used for adapting the transmission rate used in the GSM network to the transmission rate of the PSTN. The modem MO1 converts the digital information transmitted in the GSM network into an analog tone information which can be passed through the PSTN.

At the receiving side, a modem M02 is also provided for reconverting the analog modem tones into the original digital information to be received by the terminal equipment TE.

Before the data transmission is started, the interworking function IWF negotiates with the mobile station MS to establish an appropriate modem selection, e.g. data rate, modulation scheme, signaling format and so on. This information is used by the interworking function IWF in order to provide a suitable adjustment of the modem MO1.

According to Fig. 1, a broken arrow indicates a digital transmission of the data call and a solid arrow indicates an analog transmission of the data call.

The data call is converted in the usual manner by the corresponding modems MO1 and M02 in order to change the data flow into a format suitable to be passed through the PSTN. However, such modems, especially high-speed modems, require a lot of processing power in the network. Moreover, the quality of the received data call is decreased due to data bit errors generated upon conversion into the modem signal and back.

Document EP-A-0 759 673 relates to a terminal adapted to negotiate the possibility of digital data transmission with a partner terminal using in-band signaling. The modem function is by-passed if a digital connection is possible.

### SUMMARY OF THE INVENTION

It is an object of the present invention to provide a method and a system for performing data transmission, by means of which processing power can be saved and transmission quality increased.

This object is achieved by a method for performing data transmission in a system having means for modem transmission on a transmission link, comprising the steps of:
checking the possibility of digitally transferring the data on a transmission link, and
transferring the data without using a modem function when a digital connection over said transmission link is possible,
characterized in that
said checking step comprises a negotiation at a network element arranged on said transmission link so as to establish digital transparency on said transmission link.

Furthermore, the above object is achieved by a system for performing data transmission, comprising:
means for performing modem-transmission on a transmission link,
checking means for checking the possibility of digitally transferring the data on the transmission link, and
control means responsive to said checking means, for performing control so as to bypass said modem transmission means, when a digital connection over the transmission link is possible,
characterized in that
said checking means comprise negotiation means arranged at a network element provided on said transmission link, wherein said negotiation means is arranged to perform negotiation so as to establish digital transparency of said transmission link.

Accordingly, the use of the modem function is restricted to those transmission cases, where digital transparency is not available or cannot be established. Thereby, processing power required for the modem function can be decreased.

Furthermore, transmission quality via digitally transparent transmission links can be improved, since the data no longer has to be converted to a modem signal and back.

In case a processor, usually a DSP (digital signal processor), handling both modem functions and other related functions such as RLP (radio link protocol) and data compression for several channels is provided, the processing power released from the modem functions can be used for new channels. If the DSPs for providing the modem function are in a dynamic pool, then the number of DSPs can be decreased significantly.

Preferably, digital transparency can be negotiated with an in-path equipment on a corresponding transmission link to thereby establish digital transparency of the transmission link.

In particular, negotiation for checking digital transparency can be performed as an in-band negotiation using bit-stealing signaling. Such an in-band negotiation can be performed during an initial modem negotiation or signaling for establishing the appropriate modem selection. In case the transparency negotiation has been successful, the modem negotiation can be stopped and digital data transfer can be started using a suitable protocol. However, it is also possible to negotiate even during a modem call.

In case an in-path compression equipment is provided on the transmission link, the transparency negotiation can be used for adapting the compression equipment by said transparency negotiation to the data transmission. Thereby, transmission advantages achieved by such a compression equipment are also available for data calls. These compression equipments may naturally operate on any applicable transmission medium or even on different transmission media. One example would be a voice over internet gateway.

If the data call is detected by a switching means, then a digitally transparent transmission link can be allocated by a switching operation of the switching means so as to establish digital transparency.

Preferably, switching to a modem data transfer can be performed, when data synchronization is lost. In this case the transmission means may switch to a modem transmission with a speed that has been agreed as a default during an initial negotiation procedure. Thereby, reliable transmission can be ensured.

In case a handover is executed during data transmission, the interworking means may allocate a new transparent link and may keep the old interworking function. Thereby, loss of data synchronization due to changes in the conditions of the transmission link can be minimized.

### BRIEF DESCRIPTION OF THE DRAWINGS

In the following, the invention will be described in greater detail on the basis of preferred embodiments with reference to the accompanying drawings in which:
Fig. 1 shows a conventional system for performing data transmission in a mobile network;
Fig. 2 shows a first embodiment of a system for performing data transmission according to the present invention;
Fig. 3 shows a flow diagram of the basic steps of a method for performing data transmission according to the present invention; and
Fig. 4 shows a second embodiment of a system for performing data transmission according to the present invention.

### DESCRIPTION OF THE PREFERRED EMBODIMENTS

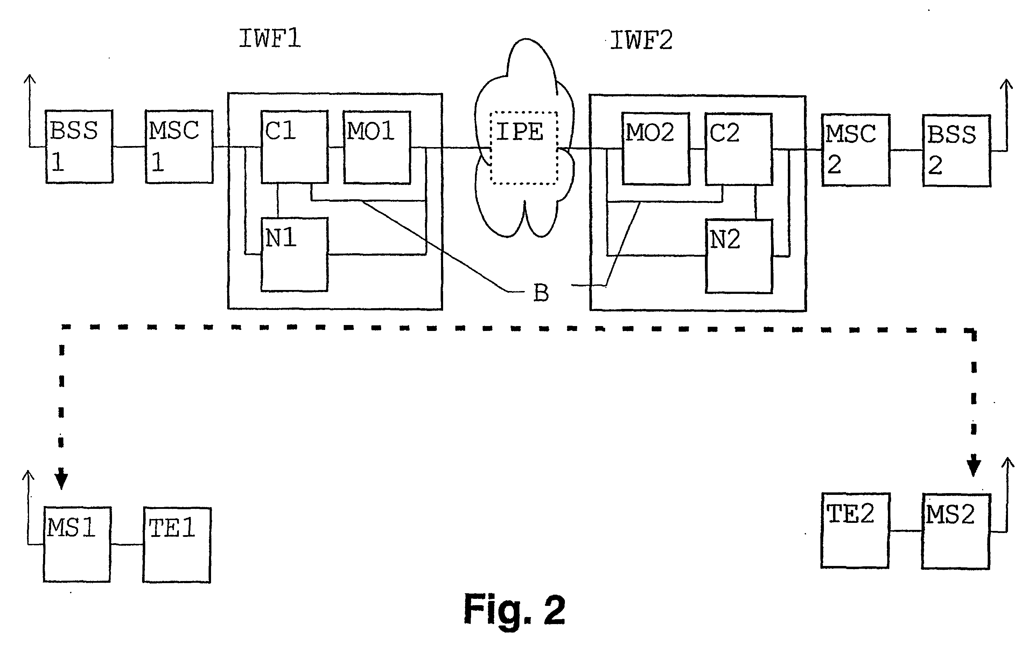

Fig. 2 shows a block-diagram of a first embodiment of a system for performing data transmission in a GSM network, according to a first embodiment of the present invention, wherein the case of a transmission of a data call between two mobile stations MS1 and MS2 is described.

In Fig. 2, a transmission link is provided between interworking functions IWF1 and IWF2 of the mobile network. On the transmission link, one or a plurality of in-path equipments IPE are arranged.

In case a data call is transmitted from a mobile station MS1 to a mobile station MS2, a low-layer compatibility checking of a received GSM bearer capability information element will be carried out by a mobile switching center MSC1 and an interworking function IWF1 at the transmission side in order to check if the call setup is compatible to the bearer services provided by a fixed network (PSTN) and to the interworking function IWF1 provided by the mobile network.

A negotiation means N1 of the interworking function IWF1 on the transmission side needs to negotiate with the transmitting mobile station MS1 to establish the appropriate modem selection, e.g. data rate, modulation scheme etc, from a modem pool provided at the interworking function IWF1. In addition, it is also required to convert the signaling format to that suitable for controlling the modem.

As an alternative, a centralized modem resource is possible, wherein signaling is performed between the mobile switching center MSC1 and the centralized modem resource in order to perform modem selection.

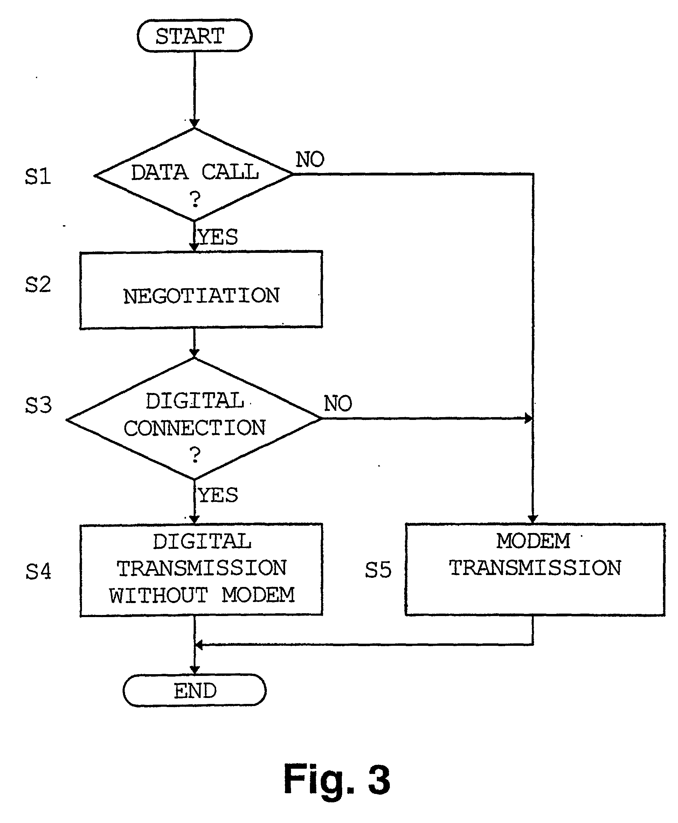

Fig. 3 shows the basic steps of the data transmission performed by the interworking function IWF1.

In case a data call is detected in step S1 during an initial establishment protocol, a negotiation is performed in step S2 in order to check (step S3), whether a digital transmission of the data via the transmission link is possible. The establishment phase therefore requires a signaling channel for negotiating digital transparency. Preferably, an in-band signaling channel is established by performing a bit-stealing method so as to insert negotiation messages into the data signal.

In case of the present GSM system, the negotiation messages can be inserted into the least significant bit (LSB) of the 64 kbit/s data signal so that, for example, the LSB of every n^{th} data word is taken for the messages. Thus, for n=16, the signaling words will be obtained by stealing every 16^{th} LSB of the successive data words contained in the data signal.

However, the present invention is not limited to a specific type of message protocol or format, but any bit-stealing signaling that is possible without corrupting the modem negotiation signals may be applied.

In case the negotiation is successful at the beginning of the call, e.g. during modem negotiation, and a digital connection can be established than the modem negotiation is stopped and a digital data transfer is performed in step S4 using some suitable protocol, for example V.110 or V.120.

The in-path equipment IPE like for example a standalone acoustic echo canceller which might violate the digital transparency of the transmission link can be standardized by updating the equipment to support digital transparency.

Furthermore, a compression equipment having a data and a speech compression function can be provided, the compression function of which can be adapted during transparency negotiation so as to perform a suitable compression of the data call. Thereby, data transmission efficiency can be increased similar to speech transmission.

In case the in-path equipment IPE cannot be updated so as to guarantee digital transparency, a usual modem transmission is performed in step S5. As an alternative, a transmission planning by selecting suitable transmission links can be performed in order to guarantee digital transparency.

Thus, if the negotiation performed by the negotiation means N1 with the in-path equipment IPE leads to the result that digital transparency can be established, the data call is transmitted from the mobile station MS1 via the base station subsystem BSS1 and the mobile switching center MSC1 to the interworking function IWF1. In the interworking function IWF1, a control means C1 responsive to the negotiation means N1 is provided which performs control so as to bypass the modem function MO1 via a symbolic but not essential bypass line B and to transmit the data call as a digital signal through the transmission link via the in-path equipment IPE to the interworking function IWF2.

In the interworking function IWF2, the modem function MO2 is also bypassed under the control of a similar control means C2 responsive to a negotiation means N2 and the digital data call is transmitted to the receiving mobile station MS2 via a receiving mobile switching center MSC2 and a receiving base station subsystem BSS2 (cf. completely broken arrow of Fig. 2).

If at some phase of the call the data synchronization gets lost, because of a change in the conditions of the transmission link, than the control means C1 of the transmitting interworking function IWF1 may revert to a modem operation by starting directly the modem transfer, wherein a transmission speed may be used that has been agreed as a default during the in-band negotiation procedures. However, such a case can be minimized if the interworking functions IWF1 and IWF2 are kept the same during the whole call. This can be achieved by keeping the old interworking function IWF1 and allocating a digitally transparent link, when a handover of the transmitting mobile station MS1 occurs.

In case the mobile switching center MSC1 is arranged for detecting a data call, then a predetermined digitally transparent link can be directly allocated by a corresponding switching operation of the mobile switching center MSC1, which is then signaled to the interworking function IWF1. Thus, the interworking function IWF1 can start transmission directly without using the modem function.

As a result, the digital data call can be transmitted without any modem conversion, such that network processing power can be saved and transmission quality improved.

It is to be noted that the present invention is not restricted to the above explanatory mobile to mobile data connection but can also be applied to any data transmission where digital transparency can be negotiated by two modems.

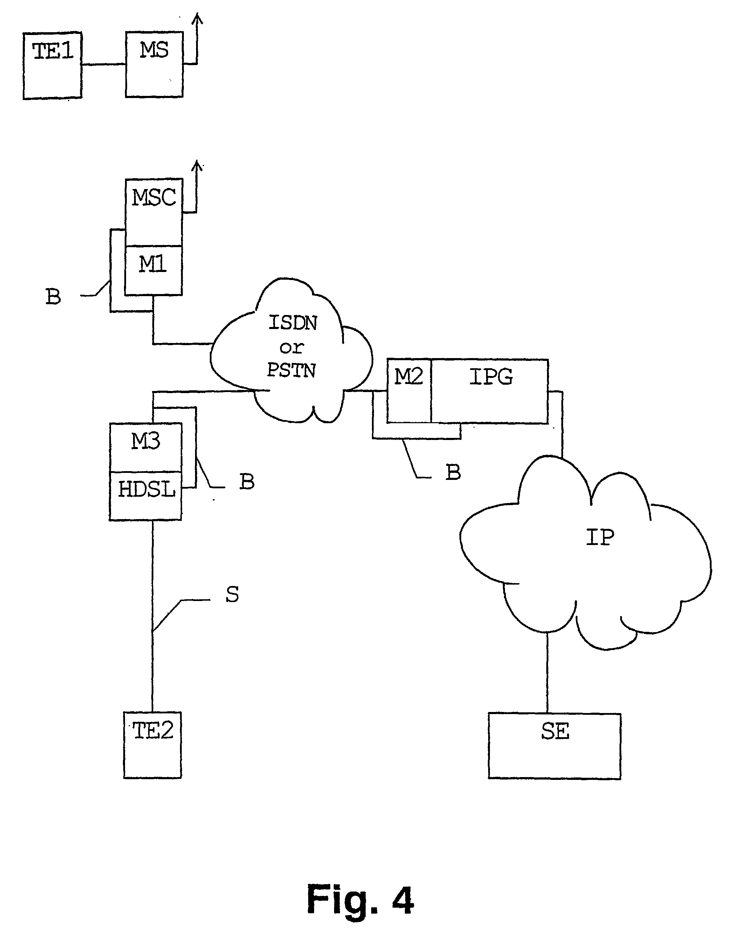

Fig. 4 shows a second embodiment in which the data transmission is performed via different networks such as an ISDN or PSTN network and an IP network (Internet).

According to Fig. 4, two possible digital connections to a server SE in the Internet IP are shown.

The first connection uses a mobile connection from a first terminal equipment TE1 via a mobile station MS and an mobile switching center MSC to the ISDN network. The mobile switching center MSC comprises a modem means M1 which can be bypassed, as shown by a symbolic bypass line B, in case a digital transmission can be negotiated. Furthermore, the first connection uses a connection via a gateway IPG and the Internet IP to the server SE. The gateway IPG comprises a modem means M2 which is connected to the ISDN network and which can be bypassed, as shown by another symbolic bypass line B, in case the gateway IPG is negotiated to be digitally transparent.

Thus, during the initial transparency negotiation, the gateway IPG, as a network element, performs control so as to bypass the modem means M2 and informs the mobile switching center MSC correspondingly. Accordingly, the modem means M1 at the mobile switching center MSC is also bypassed and a digital transmission without using any modem function is performed.

In the second connection, a modem M3 of a fixed subscriber line HSDL (High bit rate Digital Subscriber Line) is used between a second terminal equipment TE2 connected via a subscriber line S and the ISDN network. As in the first connection, the second connection is established via the gateway IPG and the Internet IP to the server SE. Also in this case, an initial transparency negotiation can be performed between the corresponding network elements HDSL and IPG so as to check digital transparency, and the modem means M2 and M3 can be bypassed in accordance with the result of the negotiation to thereby enable a digital transmission.

It should be noted that, in the present invention, digital transparency means that the data, which normally would be transmitted with a modem, can be transmitted digitally, but the connection may not be totally digitally transparent. Moreover, different coding and/or compression techniques may be provided even at different legs of a single device, as long as a digital connection is possible.

In summary, a method and system for performing data transmission is described, wherein a data call is detected and transmitted without using a modem function, in case digital connection of the transmission link can be established. A negotiation is performed in order to check the possibility of digitally transferring the data. Thereby, the use of a modem function can be restricted to those cases where digital connection cannot be established. Consequently, network processing power can be saved and transmission quality improved.

It should be understood that the above description and accompanying figures are only intended to illustrate the present invention. Thus, the method and system according to the invention may also be used in systems other than the described GSM system. The preferred embodiment of the invention may vary within the scope of the attached claims.

## Claims

1. A method for performing data transmission in a system having means **(MO1, MO2)** for modem transmission on a transmission link, comprising the steps of:
checking the possibility of digitally transferring the data on a transmission link, and
transferring **(S4)** the data without using a modem function when a digital connection over said transmission link is possible,
**characterized in that**
said checking step comprises a negotiation **(S2)** at a network element **(TWF1, IWF2)** arranged on said transmission link so as to establish digital transparency of said transmission link.

2. A method according to claim 1,
**characterized in that**
said negotiation is performed between said network element **(IWF1, IWF2)** and an in-path equipment **(IPE)** of said transmission link.

3. A method according to claim 2,
**characterized in that**
said negotiation is performed between said network element **(IWF1, IWF2)** and an in-path compression equipment.

4. A method according to claim 3,
**characterized in that**
a compression function provided by said in-path compression equipment is adapted by said negotiation to the data transmission.

5. A method according to claim 1,
**characterized in that**
said negotiation is performed between said network element **(IWF1, TWF2)** and an adaptation means (IPG) used for adapting different transmission media.

6. A method according to any one of the preceding claims,
**characterized in that**
said negotiation step is performed as an in-band negotiation using a bit-stealing signaling.

7. A method according to any one of the preceding claims,
**characterized in that**
said negotiation step is performed as a part of the normal initial modem signaling.

8. A method according to any one of the preceding claims,
**characterized in that**
the negotiation step is performed during an initial modem negotiation.

9. A method according to claim 7,
**characterized in that**
the modem negotiation is stopped and data transfer is started using a suitable protocol when the negotiation has been successful.

10. A method according to any one of the preceding claims,
**characterized by**
the step of switching to a modem data transmission, when a data synchronization is lost.

11. A method according to any one of the preceding claims,
**characterized by**
the step of allocating a new digitally transparent transmission link and keeping the old interworking function, when a handover is executed.

12. A system for performing data transmission, comprising:
means **(MO1, MO2)** for performing modem transmission on a transmission link,
checking means for checking the possibility of digitally transferring the data on the transmission link, and
control means **(C1, C2)** responsive to said checking means, for performing control so as to bypass said modem transmission means, when a digital connection over the transmission link is possible,
**characterized in that**
said checking means comprise negotiation means **(N1, N2)** arranged at a network element **(IWF1, IWF2)** provided on said transmission link, wherein said negotiation means is arranged to perform negotiation so as to establish digital transparency of said transmission link.

13. A system according to claim 12,
**characterized by**
a compression equipment which is adapted to the data transmission by said negotiation performed between said negotiation means **(N1, N2)** and said compression equipment.

14. A system according to claim 12 or 13,
**characterized in that**
said control means **(C1, C2)** are arranged to switch to a modem transmission with a speed that has been agreed as a default during an initial negotiation procedure, when data synchronization is lost.

15. A network element used in a data transmission system and having means **(IWF1, IWF2)** for performing the method according to claim 1.

## Patentansprüche

1. Verfahren zum Durchführen einer Datenübertragung bei einem System mit Einrichtungen (MO1, MO2) zur Modemübertragung auf einer Übertragungsstrecke, mit den Schritten:
Prüfen der Möglichkeit zum digitalen Transferieren der Daten auf einer Übertragungsstrecke, und
Transferieren (S4) der Daten ohne Verwenden einer Modemfunktion, wenn eine digitale Verbindung über die Übertragungsstrecke möglich ist,
**dadurch gekennzeichnet, dass**
der Prüfschritt eine automatische Einstellung (S2) bei einem Netzwerkelement (IWF1, IWF2) umfasst, das auf der Übertragungsstrecke angeordnet ist, um dadurch digitale Transparenz der Übertragungsstrecke zu erzielen.

2. Verfahren nach Anspruch 1,
**dadurch gekennzeichnet, dass**
die automatische Einstellung zwischen dem Netzwerkelement (IWF1, IWF2) und einem auf dem Übertragungspfad angeordneten Gerät (IPE) der Übertragungsstrecke durchgeführt wird.

3. Verfahren nach Anspruch 2,
**dadurch gekennzeichnet, dass**
die automatische Einstellung zwischen dem Netzwerkelement (IWF1, IWF2) und einem auf dem Übertragungspfad angeordneten Komprimiergerät durchgeführt wird.

4. Verfahren nach Anspruch 3,
**dadurch gekennzeichnet, dass**
eine von dem auf dem Übertragungspfad angeordneten Komprimiergerät zur Verfügung gestellte Komprimierfunktion von der automatischen Einstellung an die Datenübertragung angepasst wird.

5. Verfahren nach Anspruch 1,
**dadurch gekennzeichnet, dass**
die automatische Einstellung zwischen dem Netzwerkelement (IWF1, IWF2) und einer Anpassungseinrichtung (IPG) durchgeführt wird, die zur Anpassung verschiedener Übertragungsmedien Verwendung findet.

6. Verfahren nach einem der vorangehenden Ansprüche,
**dadurch gekennzeichnet, dass**
der automatische Einstellschritt als eine auf dem Übertragungsband ausgeführte automatische Einstellung unter Verwendung einer Bitklau-Signalisierung durchgeführt wird.

7. Verfahren nach einem der vorangehenden Ansprüche,
**dadurch gekennzeichnet, dass**
der automatische Einstellschritt als ein Teil der normalen anfänglichen Modemsignalisierung durchgeführt wird.

8. Verfahren nach einem der vorangehenden Ansprüche,
**dadurch gekennzeichnet, dass**
der automatische Einstellschritt während einer anfänglichen automatischen Modemeinstellung durchgeführt wird.

9. Verfahren nach Anspruch 7,
**dadurch gekennzeichnet, dass**
die automatische Modemeinstellung gestoppt wird und ein Datentransfer unter Verwendung eines geeigneten Protokolls gestartet wird, wenn die automatische Einstellung erfolgreich war.

10. Verfahren nach einem der vorangehenden Ansprüche, **gekennzeichnet durch**
den Schritt zum Schalten einer Modemdatenübertragung, wenn eine Datensynchronisation verloren gegangen ist.

11. Verfahren nach einem der vorangehenden Ansprüche, **gekennzeichnet durch**
den Schritt zum Zuweisen einer neuen digital transparenten Übertragungsstrecke und Bewahren der alten Netzanpassungsfunktion, wenn eine Übergabe ausgeführt wird.

12. System zur Durchführung einer Datenübertragung, mit:
Einrichtungen (MO1, MO2) zur Durchführung einer Modemübertragung auf einer Übertragungsstrecke,
einer Prüfeinrichtung zum Prüfen der Möglichkeit zum digitalen Transferieren der Daten auf der Übertragungsstrecke, und
auf die Prüfeinrichtung ansprechenden Steuereinrichtungen (C1, C2) zur Durchführung einer Steuerung derart, um die Modemübertragungseinrichtung zu umgehen, wenn eine digitale Verbindung über die Übertragungsstrecke möglich ist,
**dadurch gekennzeichnet, dass**
die Prüfeinrichtung eine automatische Einstelleinrichtung (N1, N2) umfasst, die bei einem Netzwerkelement (IWF1, IWF2) angeordnet ist, das auf der Übertragungsstrecke zur Verfügung steht, wobei die automatische Einstelleinrichtung dahingehend ausgestaltet ist, um eine automatische Einstellung durchzuführen, um dadurch digitale Transparenz der Übertragungsstrecke zu erzielen.

13. System nach Anspruch 12,
**gekennzeichnet durch**
ein Komprimiergerät, das an die Datenübertragung von der automatischen Einstellung angepasst ist, die zwischen der automatischen Einstelleinrichtung (N1, N2) und dem Komprimiergerät durchgeführt wird.

14. System nach Anspruch 12 oder 13,
**dadurch gekennzeichnet, dass**
die Steuereinrichtungen (C1, C2) dahingehend ausgestaltet sind, um auf eine Modemübertragung mit einer Geschwindigkeit umzuschalten, die als eine Voreinstellung während einer anfänglichen automatischen Einstellprozedur vereinbart wurde, wenn Datensynchronisation verloren gegangen ist.

15. Netzwerkelement, das bei einem Datenübertragungssystem Verwendung findet und das Einrichtungen (IWF1, IWF2) zur Durchführung des Verfahrens nach Anspruch 1 aufweist.

## Revendications

1. Procédé pour effectuer une transmission de données dans un système comportant des moyens (MO1, M02) pour la transmission par modem sur une liaison de transmission, comprenant les étapes consistant à :
contrôler la possibilité de transférer numériquement les données sur une liaison de transmission, et
transférer (S4) les données sans utiliser une fonction de modem lorsqu'une connexion numérique sur ladite liaison de transmission est possible,
**caractérisé en ce que** ladite étape de contrôle comprend une négociation (S2) au niveau d'un élément de réseau (IWF1, IWF2) agencé sur ladite liaison de transmission de manière à établir la transparence numérique de ladite liaison de transmission.

2. Procédé selon la revendication 1,
**caractérisé en ce que** ladite négociation est effectuée entre ledit élément de réseau (IWF1, IWF2) et un équipement sur le trajet (IPE) de ladite liaison de transmission.

3. Procédé selon la revendication 2,
**caractérisé en ce que** ladite négociation est effectuée entre ledit élément de réseau (IWF1, IWF2) et un équipement de compression sur le trajet.

4. Procédé selon la revendication 3,
**caractérisé en ce que** une fonction de compression réalisée par ledit équipement de compression sur le trajet est adaptée, par ladite négociation, à la transmission de données.

5. Procédé selon la revendication 1,
**caractérisé en ce que** ladite négociation est effectuée entre ledit élément de réseau (IWF1, IWF2) et des moyens d'adaptation (IPG) utilisés pour adapter différents supports de transmission.

6. Procédé selon l'une quelconque des revendications précédentes,
**caractérisé en ce que** ladite étape de négociation est effectuée comme une négociation dans la bande en utilisant une signalisation à détournement de bits.

7. Procédé selon l'une quelconque des revendications précédentes,
**caractérisé en ce que** ladite étape de négociation est effectuée en tant que partie de la signalisation de modem initiale normale.

8. Procédé selon l'une quelconque des revendications précédentes,
**caractérisé en ce que** l'étape de négociation est effectuée pendant une négociation de modem initiale.

9. Procédé selon la revendication 7,
**caractérisé en ce que** la négociation de modem est arrêtée et un transfert de données est débuté en utilisant un protocole approprié lorsque la négociation a été réussie.

10. Procédé selon l'une quelconque des revendications précédentes,
**caractérisé par** l'étape de commutation vers une transmission de données par modem, lorsqu'une synchronisation des données est perdue.

11. Procédé selon l'une quelconque des revendications précédentes,
**caractérisé par** l'étape d'allocation d'une nouvelle liaison de transmission numériquement transparente et de maintien de l'ancienne fonction d'interfonctionnement, lorsqu'un transfert intercellulaire est effectué.

12. Système pour effectuer une transmission de données, comprenant :
des moyens (MO1, M02) pour effectuer une transmission par modem sur une liaison de transmission,
des moyens de contrôle pour contrôler la possibilité de transférer numériquement les données sur la liaison de transmission, et
des moyens de commande (C1, C2), adaptés auxdits moyens de contrôle, pour effectuer une commande de manière à ne pas utiliser lesdits moyens de transmission par modem, lorsqu'une connexion numérique sur la liaison de transmission est possible ;
**caractérisé en ce que** lesdits moyens de contrôle comprennent des moyens de négociation (N1, N2) agencés au niveau d'un élément de réseau (IWF1, IWF2) prévu sur ladite liaison de transmission, dans lequel lesdits moyens de négociation sont agencés pour effectuer une négociation de manière à établir la transparence numérique de ladite liaison de transmission.

13. Système selon la revendication 12,
**caractérisé par** un équipement de compression qui est adapté à la transmission de données par ladite négociation effectuée entre lesdits moyens de négociation (N1, N2) et ledit équipement de compression.

14. Système selon la revendication 12 ou 13,
**caractérisé en ce que** lesdits moyens de commande (C1, C2) sont agencés pour commuter vers une transmission par modem à une vitesse qui a été accordée par défaut pendant une procédure de négociation initiale, lorsque la synchronisation des données est perdue.

15. Elément de réseau utilisé dans un système de transmission de données et comportant des moyens (IFW1, IFW2) pour exécuter le procédé selon la revendication 1.
